# DEMANDE DE BREVET EUROPEEN

(11) **EP 2 101 077 A1**
(43) Date de publication de la demande: **16.09.2009**
(21) Numéro de dépôt: 09155055.8
(22) Date de dépôt: 12.03.2009
(51) Int. Cl.: F16D 66/02, B60T 17/22

(54) **Procédé de détermination de l'état d'usure des garnitures de frein d'un véhicule automobile et système d'indication de cet état au conducteur**

(30) Priorité: 13.03.2008 FR 0851627
(71) Demandeur: PEUGEOT CITROËN AUTOMOBILES S.A., 78140 Vélizy Villacoublay (FR)
(72) Inventeur: Camus, Gérard, 92400, Courbevoie (FR)

(57) **Abrégé**

L'invention concerne un procédé de détermination d'une capacité d'utilisation restante de garnitures de frein d'un véhicule automobile comportant les étapes suivantes :
- détermination d'un état d'usure d'une garniture de frein,
- détermination d'un solde d'usure par comparaison de l'état d'usure avec une capacité de freinage prédéfinie d'une garniture,
- détermination d'une distance parcourue par le véhicule, avec cette garniture de frein, et
- évaluation, en fonction du solde d'usure et de la distance déjà parcourue, d'une distance restant à parcourir.

## Description

### Domaine de l'invention

L'invention concerne un procédé pour déterminer l'état d'usure des garnitures d'un système de freinage d'un véhicule automobile. L'état d'usure de ces garnitures est donné, dans l'invention, sous la forme d'une capacité d'utilisation restante, c'est-à-dire d'une distance restant à rouler pour le véhicule avant la maintenance du système de freinage.

L'invention concerne également un système indiquant au conducteur du véhicule la distance restant à rouler avant maintenance.

L'invention trouve des applications dans le domaine de l'automobile et, en particulier, dans le domaine du freinage du véhicule.

### Etat de la technique

Un système de freinage de véhicule automobile est un système qui permet, par frottement, de produire une force résistante permettant d'annuler l'énergie cinétique, ou force d'avancement, du véhicule. Le frottement est réalisé par la mise en contact plus ou moins prononcée de deux surfaces, l'une étant solidaire d'un élément tournant avec les roues, l'autre étant un élément fixe monté sur le châssis du véhicule.

Les systèmes de freinage classiques sont des systèmes à disques et des systèmes à tambours. Un système de freinage, ou frein, est associé à chaque roue du véhicule. Pour des raisons de coût et de fiabilité, les véhicules actuels sont généralement équipés de systèmes de freinage à disque. Un système de freinage à disque comporte un élément mobile, le disque, aptes à frotter sur un élément fixe. Cet élément fixe est équipé d'au moins une garniture, appelée aussi plaquette, placée entre l'élément mobile et l'élément fixe et destinée à s'user sous l'effet des frottements.

Une garniture de frein est généralement réalisée dans un matériau de friction ayant, d'une part, un coefficient de frottement le plus constant possible afin de permettre une usure de la surface de la garniture la plus régulière possible et, d'autre part, une résistance convenable à l'usure afin de garantir une usure pas trop rapide de la garniture. Lorsqu'une garniture a un état d'usure avancé, son coefficient de frottement devient relativement mauvais, ce qui entraîne un freinage plus difficile et donc une distance de freinage plus longue.

Aussi, pour assurer la sécurité du véhicule, il est nécessaire que les garnitures de frein d'un véhicule soient changées régulièrement. Pendant longtemps, les garnitures de frein étaient changées, en atelier, à chaque révision du véhicule.

Actuellement, les véhicules sont de plus en plus fiables et les révisions systématiques de ces véhicules de moins en moins fréquentes. En outre, l'usure des garnitures est irrégulière d'un véhicule à un autre ; en effet, elle est fonction notamment du type de véhicule (en particulier de sa masse), de la conduite du conducteur (conduite sportive avec accélérations et freinages répétés ou conduite régulière), des trajets effectués par le véhicule (parcours en ville, en plaine ou en montagne), etc. Aussi, pour des raisons de coût et de sécurité, il est intéressant d'adapter la fréquence de changement des garnitures à l'usure réelle des garnitures.

Pour cela, il est intéressant de pouvoir vérifier régulièrement l'état des garnitures de frein afin de les remplacer si nécessaire. Dans cette optique, une réglementation a été mise en place concernant le freinage des véhicules. En particulier, le complément 8 du règlement R.13, en vigueur depuis le 26 février 2004, évoque l'évaluation des surfaces de freinage. Cette réglementation exige que le contrôle des garnitures du système de freinage soit possible sans démontage des roues, en utilisant uniquement un outillage d'inspection standard. Cette réglementation est considérée comme respectée dès lors que le conducteur peut avoir connaissance de l'état d'usure des garnitures du système de freinage de son véhicule.

Suivant cette réglementation, la connaissance de l'état d'usure des garnitures de frein peut être obtenue par un contrôle visuel des garnitures du système de freinage effectué via des trous de visite disposés de façon à permettre la visibilité des garnitures depuis les roues du véhicule. Dans ce cas, la détection de l'usure des garnitures est réalisée mécaniquement. Cette détection mécanique propose une vision directe des garnitures de frein sans démontage de la roue. Or, cette vision directe n'est possible que dans le cas de jantes en alliage très ajourées. Il est impossible, sur un véhicule équipé de jantes en tôle, de visionner directement les garnitures de frein, du fait de la structure fermée (c'est-à-dire non ajourée) des jantes en tôle. Un tel système ne peut donc être installé que sur des véhicules ayant des roues de style particulier. En outre, le système de freinage est situé dans un environnement qui subit les salissures de la route, les projections d'eau, de terre et autres amalgames de poussière. L'appréciation visuelle impose donc un nettoyage préalable du système de freinage qui, lui, nécessite le démontage de la roue, ce qui est contraire à la réglementation en vigueur.

La connaissance de l'état d'usure des garnitures peut aussi être obtenue au moyen d'un système d'information comportant, pour chaque roue, un capteur d'usure. Ce système d'information avertit le conducteur, par un signal sonore et/ou lumineux, que les garnitures du système de freinage sont usées et qu'elles doivent être remplacées.

Actuellement, il existe différents systèmes permettant de déterminer un état d'usure avancé des garnitures de frein. Des systèmes de type électrique sont connus. Ces systèmes comportent généralement un conducteur électrique intégré dans la garniture du système de freinage à vérifier. Lorsque la garniture atteint un seuil d'usure prédéterminé, la dégradation de la garniture s'accompagne d'une dégradation du conducteur électrique. Cette dégradation du conducteur électrique entraîne une modification de l'état du circuit électrique et déclenche un signal d'avertissement auprès du conducteur.

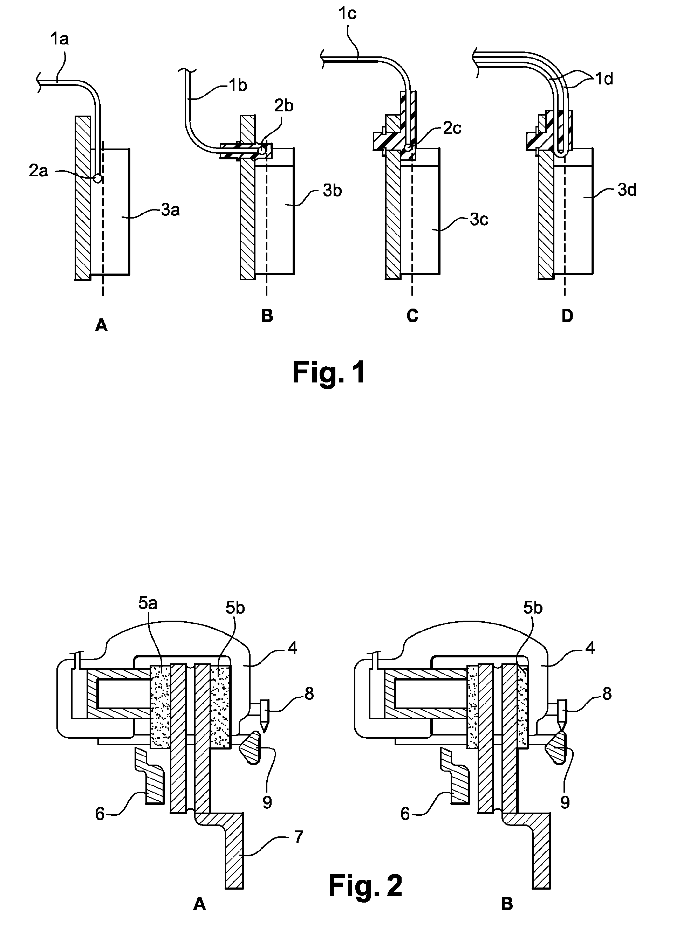

Des exemples de différents systèmes de détection électrique de l'usure de garniture sont représentés sur la figure 1.

Dans le cas A de la figure 1, le conducteur électrique 1a est noyé dans la garniture 3a de frein. Un signal d'avertissement du conducteur est obtenu par contact d'un témoin 2a constitué par une extrémité du conducteur électrique avec l'élément mobile du système de freinage.

Dans le cas B de la figure 1, le conducteur électrique 1 b est rapporté transversalement dans la garniture 3b du système de freinage. Comme pour le cas A, un signal d'avertissement est obtenu par contact de l'élément mobile du système de freinage avec le témoin 2b du conducteur électrique.

Dans le cas C de la figure 1, le conducteur électrique 1c est rapporté radialement dans la garniture 3c du système de freinage. Le signal d'avertissement au conducteur est obtenu par contact de l'élément mobile du système de freinage avec le témoin 2c du conducteur électrique.

Dans le cas D de la figure 1, le conducteur électrique 1d est double. Il est rapporté radialement dans la garniture 3d du système de freinage. Le signal d'avertissement au conducteur est obtenu par coupure du circuit électrique suite au frottement de l'élément mobile sur le conducteur électrique 1d.

De tels systèmes de détection électrique fournissent une information active et directe au conducteur de l'état d'usure des garnitures. Cependant, ces systèmes sont onéreux car ils nécessitent, pour chaque garniture à surveiller, un conducteur électrique et un circuit électrique associé. Ils nécessitent également une mise en oeuvre et une implantation d'une boucle d'alimentation et d'un retour de masse dans le train du véhicule et dans le frein du véhicule. En outre, les systèmes à témoin (cas A, B et C) ont une fiabilité relativement faible. Le système à coupure de circuit (cas D) est plus fiable mais entraîne un coût plus élevé.

Il existe également un système d'information de l'usure de la garniture par un signal sonore. Ce système consiste à placer un témoin d'usure apte à entrer en contact avec le disque du système de freinage lorsque la garniture atteint une épaisseur minimale. Lorsque le disque entre en contact avec le témoin d'usure, une vibration se produit. Cette vibration est audible et constitue un signal sonore pour le conducteur. Ce système fournit au conducteur une information active sur l'état d'usure des garnitures de frein, pour un coût relativement peu élevé car sa mise en oeuvre est relativement simple car interne au système de freinage. Cependant, ce système présente une bruyance relativement gênante pour le conducteur et qui va à l'encontre de l'évolution acoustique des véhicules que les constructeurs cherchent à insonoriser au mieux. En outre, l'avertissement sous forme de vibration sonore n'est pas clairement identifiable par le conducteur, ce qui rend ce système peu fiable.

Il existe, par ailleurs, un système d'information par signal d'index. Un tel système est représenté sur la figure 2. Ce système, adapté pour un système de freinage à étrier coulissant, comporte un index 9 fixé sur un élément fixe 6 du système de freinage, par exemple la chape, et un repère 8 fixé sur l'élément mobile du système de frein, à savoir l'étrier 4. Des garnitures 5a, 5b sont placées de part et d'autre du disque 7. L'étrier 4 se déplace sur la chape 6, en fonction de l'usure des garnitures 5, de façon à être constamment centré sur le disque. La position du repère 8 face à l'index 9 indique le niveau d'usure des garnitures. Dans le cas A de la figure 2, les garnitures 5a, 5b sont neuves. Au fur et à mesure de l'usure des garnitures, l'étrier 4 coulisse sur la chape. Le repère 8, fixé sur l'étrier 4, se déplace vers l'index 9 au fur et à mesure du coulissement de l'étrier. Dans le cas B de la figure 2, les garnitures 5a et 5b sont usées. L'étrier 4 a coulissé sur la chape jusqu'à ce que le repère 8 soit face à l'index 9. Cette position du repère face à l'index indique que les garnitures sont usées et doivent être changées. Un tel système présente une information continue et proportionnelle de l'état d'usure des garnitures, avec un coût relativement peu élevé car sa mise en oeuvre est interne au système de freinage. Cependant, ce système offre une information passive, sans alerte du conducteur. De plus, l'information fournie concerne uniquement l'usure de la garniture externe 5b ; ce système ne permet pas de surveiller l'usure de la plaquette interne 5a. En outre, ce système nécessite un accès visuel direct sur la zone de l'index qui se situe sous le véhicule.

Il existe également des méthodes permettant d'estimer l'usure des garnitures de système de freinage. L'une de ces méthodes est décrite dans la demande de brevet US-B2-6,655,502. Cette méthode consiste à estimer l'usure d'une garniture de frein en prenant en compte différents paramètres dans un modèle d'usure. Ces paramètres, tels que la pression de freinage, la température dans la région de la garniture de frein, sont introduits dans une formule polynomiale pour obtenir une estimation de l'état d'usure de la garniture de frein.

Une autre méthode d'estimation de l'usure de la garniture de frein est décrite dans le document US 2004/0138791 A1. Cette demande de brevet propose un procédé dans lequel l'énergie employée par le disque de friction est calculée. Cette énergie de freinage est déterminée au moyen de plusieurs paramètres comme la pression de freinage, la durée de freinage, la vitesse du véhicule etc.

Une autre méthode encore d'estimation de l'usure de la garniture de frein est décrite dans la demande de brevet EP-B1-0 598 997. Cette méthode consiste à détecter de façon continue certains paramètres de fonctionnement du véhicule, comme le temps de freinage et la vitesse de rotation ou la vitesse angulaire ou encore la vitesse périphérique des roues du véhicule. A partir de ces paramètres de fonctionnement, d'autres paramètres sont déterminés qui sont considérés comme caractéristiques de l'usure des garnitures.

Ces différentes méthodes permettent d'informer le conducteur d'un état d'usure avancé des garnitures du système de freinage. Ces techniques permettent donc de prévenir le conducteur que les garnitures de frein doivent être changées. Elles ne permettent pas d'informer le conducteur du niveau d'usure des garnitures. Autrement dit, le conducteur est averti au moment où les garnitures de frein de son véhicule doivent être remplacées. Il doit alors amener rapidement le véhicule à l'atelier, pour la maintenance des garnitures de frein. Le conducteur n'est pas informé à l'avance que l'état des garnitures va nécessiter un remplacement ; il ne peut donc pas prévoir le moment où il devra amener le véhicule à l'atelier pour remplacer les garnitures.

Par ailleurs, les garnitures de frein sont soumises, lors des frottements, à des températures élevées pouvant atteindre 600° à 700° C. Lorsque la température de la garniture est trop élevée, un phénomène d'évanouissement, appelé fading en termes anglo-saxons, peut se produire. L'évanouissement est un phénomène de perte des capacités de frottement des garnitures de frein lorsque le système de freinage atteint des températures extrêmes dépassant les températures limites de fonctionnement. Un évanouissement se traduit par une perte presque totale de freinage du véhicule, avec toutes les conséquences que cela peut entraîner. Or, aucune des techniques de l'art antérieur décrites précédemment ne permet d'informer le conducteur d'un risque d'évanouissement.

### Exposé de l'invention

L'invention a justement pour but de remédier aux inconvénients des techniques exposées précédemment. A cette fin, l'invention propose un procédé permettant d'informer le conducteur de la distance qui reste à parcourir, au véhicule, avant que la garniture de frein ne soit usée. La distance restant à parcourir est évaluée en prenant en compte différents paramètres du véhicule dont la température du système de freinage. La détermination de la température du système de freinage permet, dans un mode de réalisation de l'invention, d'informer le conducteur d'un risque de fading.

De façon plus précise, l'invention concerne un procédé de détermination d'une capacité d'utilisation restante de garnitures de frein d'un véhicule automobile comportant les étapes suivantes :
- détermination d'un état d'usure d'une garniture de frein,
- détermination d'un solde d'usure par comparaison de l'état d'usure avec une capacité de freinage prédéfinie d'une garniture,
- détermination d'une distance parcourue par le véhicule, avec cette garniture de frein, et
- évaluation, en fonction du solde d'usure et de la distance déjà parcourue, d'une distance restant à parcourir.

L'invention concerne également une ou plusieurs des caractéristiques suivantes :
- la détermination de l'état d'usure comporte :
   - une détermination de données permanentes relatives au système de freinage du véhicule et au véhicule lui-méme ;
   - une détermination de données variables relatives au déplacement du véhicule ;
   - une détermination de données instantanées liées au freinage du véhicule ;
   - une évaluation, à partir de ces données instantanées, variables et permanentes, d'une consommation instantanée d'usure des garnitures à chaque sollicitation de freinage ; et
   - un cumul des consommations instantanées d'usure des garnitures.
- la détermination des données instantanées comporte une évaluation d'une température instantanée du frein.
- l'évaluation de la température instantanée comporte :
   - une détermination de la vitesse du véhicule,
   - une détermination d'une énergie de freinage, et
   - une détermination d'une température de début de freinage.
- la détermination des données variables comporte la détermination de la charge du véhicule et la détermination d'une pente dans le parcours du véhicule.
- la détermination des données permanentes comporte une définition de caractéristiques de conception du frein, une définition de caractéristiques d'un couple garniture/frein et une définition de caractéristiques propres au véhicule lui-même.
- les données variables sont évaluées par apprentissage, en comparant des données mesurées avec des données apprises.

L'invention concerne aussi un procédé de détermination d'un risque de fading, **caractérisé en ce qu**'il comporte :
- une évaluation de la température instantanée du frein, et
- une comparaison de ladite température instantanée du frein avec une température limite de fonctionnement

L'invention concerne, en outre, un système d'indication d'une capacité d'utilisation restante d'une garniture de frein d'un véhicule automobile, **caractérisé en ce qu**'il comporte :
- des moyens pour déterminer un état d'usure de la garniture de frein,
- des moyens de calcul pour comparer cet état d'usure avec une capacité de freinage prédéfinie et pour déterminer une distance restant à rouler, et
- des moyens pour transmettre, au conducteur, une information de distance restant à parcourir.

Les moyens pour déterminer l'état d'usure, dans ce système, peuvent comporter au moins un capteur de vitesse, au moins un capteur d'appui de pédale de frein et au moins un capteur de pression de frein.

L'invention concerne également un système d'indication d'un risque de fading

L'invention concerne enfin un véhicule équipé d'un système d'information décrit précédemment.

### Brève description des dessins

La figure 1, déjà décrite, représente des exemples de systèmes de détermination électrique d'un état dégradé d'une garniture de frein pour véhicule automobile.
La figure 2, déjà décrite, représente un exemple de système mécanique d'information d'un état d'usure avancé d'une garniture de frein.
La figure 3 représente un diagramme fonctionnel d'une sollicitation de freinage dans un véhicule automobile.
La figure 4A représente un diagramme fonctionnel de la détermination de la température du système de freinage, selon l'invention.
La figure 4B représente des exemples de courbes de la température instantanée utilisée dans le procédé de l'invention.
La figure 5A représente un diagramme fonctionnel de la détermination de l'usure d'une garniture de système de freinage, selon l'invention.
La figure 5B représente des exemples de courbes du débit d'usure utilisé dans le procédé de l'invention.
La figure 6 représente un diagramme fonctionnel de l'estimation de la distance restant à parcourir avant maintenance des garnitures du système de freinage.

### Description détaillée de modes de réalisation de l'invention

L'invention concerne un procédé permettant d'informer le conducteur d'un véhicule automobile de la distance restant à parcourir avant maintenance du système de freinage. Autrement dit, le procédé de l'invention propose de déterminer une distance de roulage correspondant à la distance maximum que peut parcourir un véhicule avant d'être amené à l'atelier pour remplacement des garnitures du système de freinage et d'informer le conducteur de cette distance de roulage.

Selon l'invention, cette distance de roulage est une information personnalisée qui prend en compte l'historique d'usure et la conduite du véhicule.

Dans une variante de l'invention expliquée plus en détail par la suite, le procédé de l'invention utilise un principe d'apprentissage basé sur une auto adaptation des coefficients utilisés pour déterminer l'état d'usure des garnitures et adaptés aux caractéristiques exactes du véhicule.

Dans l'invention, l'état d'usure des garnitures est utilisé pour déterminer la capacité d'utilisation restante des garnitures du système de freinage. Cet état d'usure est évalué en fonction du taux d'usage de ces garnitures et de leurs conditions d'utilisation. Cette information de l'état d'usure des garnitures est transmise au conducteur, par un signal visuel et/ou sonore, sous la forme d'une distance restant à parcourir avant maintenance. Cette information peut être transmise, par exemple, par affichage sur le tableau de bord du véhicule, soit sur l'écran de l'ordinateur de bord soit sur le combiné tachygraphe compte-tours.

Cette information relative à l'état d'usure des garnitures peut être une donnée indépendante ou une donnée couplée avec l'indicateur de maintenance générale qui affiche automatiquement, à la mise sous contact du véhicule, la distance restant avant une révision générale. Cette information peut également être associée à d'autres informations de sécurité, comme l'information relative au contrôle de gonflage des roues.

Dans l'invention, l'état d'usure des garnitures est déterminé sous la forme d'une estimation de la consommation d'usure des garnitures de frein. Elle peut être apparentée, pour le conducteur, à la fonction existante de calcul de la consommation du carburant et de l'autonomie avant le prochain plein d'essence, ou à la toute nouvelle fonction de calcul de maintenance du moteur et du reste à rouler avant vidange.

Comme on le verra de façon plus détaillée par la suite, cette information d'état d'usure des garnitures est personnalisée. Elle prend en compte la conduite du conducteur, l'usage du véhicule et le parcours réalisé.

Pour déterminer la distance de roulage du système de freinage, l'invention utilise un ensemble de paramètres et caractéristiques relatifs au véhicule et au comportement du véhicule. De façon plus précise, l'évaluation de la distance de roulage est basée sur l'utilisation de valeurs de données instantanées, de valeurs de données permanentes et de données variables.

Les données permanentes sont des informations propres au système de freinage et au véhicule. Ces données varient en fonction du véhicule et du système de freinage considérés. Elles sont permanentes pour un véhicule donné et pour un système de freinage donné. Les données permanentes comprennent la définition de conception du couple de composants plaquettes/disques, telle que les matériaux dans lesquels ils sont réalisés, leurs surfaces, leur géométrie, leurs formes, etc. Les données permanentes comprennent aussi la définition de conception du système de frein, telle que les disques, les étriers, la régulation, la ventilation, etc. Elles comportent aussi la définition du véhicule par lui-même, à savoir sa masse et sa répartition, la hauteur de son centre de gravité, etc.

Les données variables sont des données qui, pour un véhicule donné et un système de freinage donné, varient en fonction des utilisations momentanées du véhicule. Les données variables sont notamment la charge du véhicule et le trajet du véhicule.

Les données instantanées sont des mesures réalisées sur le véhicule à un instant donné. Ces données instantanées sont, par exemple, la sollicitation du conducteur sur la pédale de frein ou la sollicitation automatique du freinage (au moyen d'un système de type ESP, ABS etc.). En effet, le système de freinage est soumis à une pression générée par le conducteur via une pédale de frein. Cette pression transmet un couple de forces sur la roue du véhicule. Ce couple de forces s'oppose aux forces d'avancement du véhicule, ralentissant le véhicule.

Les forces d'avancement sont directement liées à la définition du véhicule, c'est-à-dire notamment à sa charge et à son trajet. En effet, plus le véhicule est chargé, et donc sa masse élevée, plus le couple de freinage doit être élevé pour arrêter le véhicule. On comprend également que le trajet du véhicule a une importance sur le couple de freinage. En effet, si le véhicule roule dans une pente descendante, le couple de freinage doit être plus élevé pour arrêter le véhicule que si le véhicule est sur une route plane ou sur une pente montante.

De plus, la puissance développée par le frein est fonction de la vitesse du véhicule. En effet, l'énergie générée lors d'un freinage est liée à la capacité de ralentissement du système de freinage et à la durée d'application de la pression de freinage.

L'énergie nécessaire au freinage est donc calculée à partir de la pression appliquée par le conducteur sur la pédale de frein, par la vitesse de la roue et par la caractéristique C/P. La caractéristique couple/pression, appelée caractéristique C/P, est la caractéristique fonctionnelle du frein qui relie le couple délivré par le frein à la pression appliquée et qui prend en compte le dimensionnement du disque et de l'étrier, l'efficacité de la garniture et le rendement global du système de freinage (les éléments dimensionnels du système de freinage étant fixes, le rendement est considéré comme constant). La caractéristique C/P relie, en instantané, la sollicitation de pression du conducteur à l'énergie mécanique générée par le frein en réaction. La caractéristique C/P est choisie dans une table fonction de la vitesse de la roue, de la température du frein et de l'historique de la sollicitation.

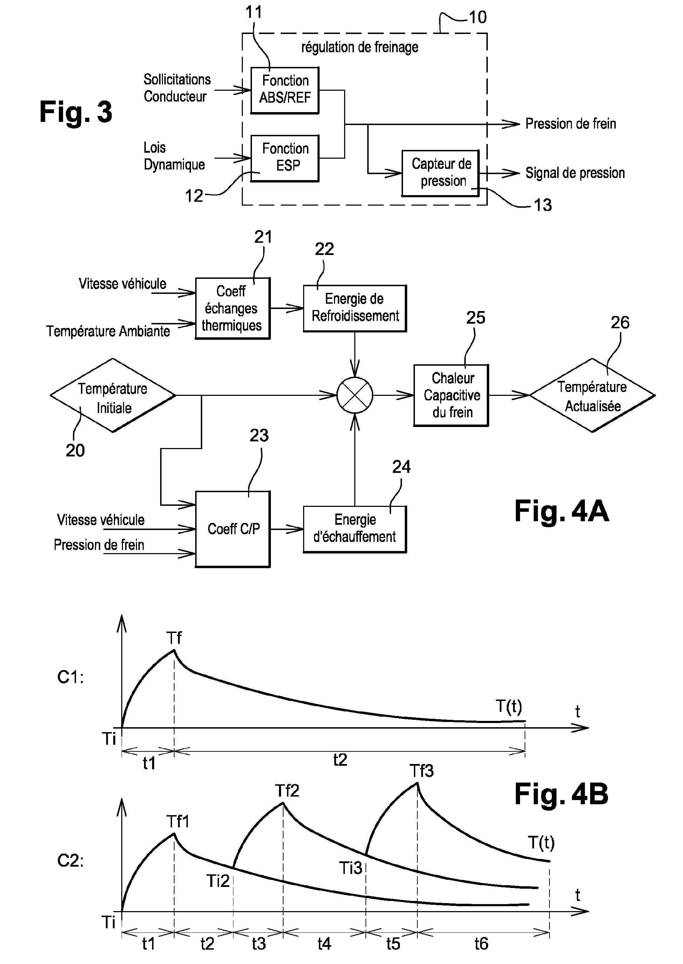

On a représenté, sur la figure 3, un exemple de diagramme fonctionnel relatif à une sollicitation de freinage. Une sollicitation de freinage prend en compte les sollicitations du conducteur via la pédale de frein, les sollicitations automatiques du freinage et les lois dynamiques. La fonction ESP 12 du bloc de régulation de freinage 10 prend en compte les lois dynamiques et fournit, en sortie, une pression de frein. Les sollicitations du conducteur sont mesurées par un capteur d'appui de la pédale et traitées par une fonction ABS/REF 11 du bloc de régulation de freinage 10 qui fournit, en sortie, une pression de frein.

Un capteur de pression 13 mesure la pression de frein en sortie des fonctions ABS 11 et ESP 12 et fournit un signal de pression. En effet, dans l'évaluation de l'usure des garnitures, il est nécessaire de connaître l'intensité de l'effort de freinage et de suivre son évolution pendant toute la durée du freinage. Cette intensité est mesurée par le capteur 13 de pression du circuit hydraulique de freinage. Ce capteur est généralement présent dans les circuits de frein avec régulation ESP. Il n'est généralement pas présent dans les boîtiers ABS, mais il peut sans problème y être implanté.

Les données instantanées utilisées pour la détermination de l'usure instantanée des garnitures comprennent aussi la température du frein. La température instantanée de fonctionnement du frein est un paramètre qui est fréquemment utilisé en laboratoire mais qui généralement trop complexe à mettre en oeuvre pour un usage particulier. Aussi, dans l'invention, on propose, au lieu de mesurer la température instantanée de fonctionnement du frein, de l'estimer par calcul en fonction de données de fonctionnement connues du véhicule.

Dans l'invention, la température instantanée du frein est estimée à partir de l'énergie de freinage. C'est un facteur essentiel dans la définition du taux d'usure. La température de début de freinage est également calculée ; elle permet d'intégrer le facteur historique de freinage dans le calcul d'usure.

L'estimation de la température instantanée prend en compte deux phases du système de freinage : la phase d'échauffement et la phase de refroidissement.

En phase d'échauffement, dès l'apparition d'un signal de pression, l'ensemble de l'énergie générée par le frein est transformé en chaleur absorbée par la masse du système de frein. L'élévation de la température du système de frein est définie par le flux d'énergie et la caractéristique de chaleur capacitive du frein. Ces valeurs sont liées à la définition du véhicule, construites par calcul et conformées par essais.

En absence de pression de frein, le frein passe en phase de refroidissement. Le refroidissement est fonction des caractéristiques connues du frein, de la vitesse du véhicule et de la température extérieure. Ces lois sont liées à la définition du véhicule, construites par calcul et conformées par essais. Il est à noter que le refroidissement a lieu également pendant la phase d'échauffement. Il intervient peu en freinage de forte décélération, par exemple lors d'un « coup de frein » brusque, mais il est important dans certaines phases de conduite, par exemple dans les descentes à ralentissement en continu.

La capacité de refroidissement d'un système de frein est très faible par rapport à sa capacité d'échauffement.

Comme on le comprend de ce qui précède, la température d'un frein évolue en permanence. De plus, la température finale d'une phase de freinage dépend de l'énergie déployée et de la température initiale. La température initiale dépend de la température finale de la phase de freinage précédente, de la durée de phase de refroidissement et de la ventilation obtenue par la vitesse du véhicule.

En cas de séquences de freinage rapprochées, la température instantanée du frein augmente progressivement. Elle ne doit toutefois pas atteindre la limite de fonctionnement. Un exemple de courbes de température est représenté sur la figure 4B. La courbe C1 de la figure 4B montre un exemple de température instantanée T (t). Sur cette courbe C1, La température T a une valeur initiale Ti. Pendant la phase d'échauffement t1, la température T augmente jusqu'à une valeur finale Tf. Pendant la phase de refroidissement t2, la courbe C1 décroît jusqu'à une température proche de Ti (Ti étant la température de base du système de freinage). L'exemple de la courbe C1 peut correspondre à une sollicitation de freinage comportant une seule pression de freinage, par exemple une pression de la pédale de frein par le conducteur. La courbe C2 représente une succession de pressions de freinage lors d'une même sollicitation de freinage. Comme le montre la courbe C2, la température instantanée T dépend de l'historique des phases de freinage. Ainsi, la température T en fin de sollicitation, c'est-à-dire lors de la phase de refroidissement t6, a une valeur éloignée de Ti. En effet, dans l'exemple de la courbe C2, la phase d'échauffement t1 correspond à une première pression de la pédale de frein. Une phase de refroidissement t2 suit cette phase d'échauffement t1. A ce moment, si le conducteur presse à nouveau la pédale de frein, alors que la température T n'était pas redescendue proche de Ti, la phase d'échauffement t3 relative à cette seconde pression de freinage débute à la valeur Ti2 et augmente jusqu'à Tf2. La température instantanée Tf2 est alors supérieure à la température Tf1 de la première pression de freinage. Il en est de même pour la troisième pression de freinage dont l'échauffement débute à la valeur Ti3 (supérieure à la valeur Ti2) et se termine à la valeur Tf3. On comprend, à partir de cette courbe, que la température Tf à la fin d'une sollicitation de freinage dépend de la température Ti au début de cette sollicitation, c'est-à-dire de la température du système de freinage au début de la sollicitation de freinage, la température instantanée se cumulant à la température instantanée précédente si celle-ci n'a pas eu le temps de décroître jusqu'à la température initiale Ti. La température instantanée dépend donc de l'historique des phases de freinage.

Une telle courbe C2 peut être obtenue, par exemple, lorsque le conducteur freine une première fois puis lâche la pédale de frein, appuie à nouveau sur la pédale de frein, relâche la pédale de frein et appuie une troisième fois sur ladite pédale, chaque appui constituant une pression de freinage. Un même exemple de courbe pourrait être obtenu pour des sollicitations de freinage au moyen de la fonction ESP ou de la fonction ABS du véhicule.

Dans le procédé de l'invention, on évalue la température instantanée à partir de différents paramètres. Pour une meilleure compréhension de l'invention, on appellera par la suite « température actualisée », la température instantanée calculée à un instant donné d'une sollicitation de freinage. La figure 4A représente un diagramme fonctionnel relatif à l'évaluation de cette température actualisée. Selon l'invention, la détermination de la température actualisée 26 comporte une mesure de la température ambiante au véhicule ainsi qu'une mesure de la vitesse du véhicule. On détermine, à partir de ces deux paramètres, un coefficient d'échange thermique 21 autour du véhicule. On déduit, de ce coefficient, une énergie de refroidissement 22 disponible.

On détermine, par ailleurs, la pression de frein (comme montré sur la figure 3) et la température initiale 20 du frein, c'est-à-dire la température au début d'une sollicitation de freinage. Cette température initiale est obtenue par mesure au moyen d'un capteur de température. On détermine, à partir de la pression de frein, de la température initiale et de la vitesse du véhicule, un coefficient C/P 23. On déduit, de ce coefficient C/P, une énergie d'échauffement 24 du frein. Une loi combine l'énergie de refroidissement 22, l'énergie d'échauffement 24 et la température initiale 20 pour déterminer la chaleur capacitive 25 du frein. On déduit, de cette chaleur capacitive 25, la température actualisée 26.

Cette détermination par calcul de la température actualisée 26 entraîne une erreur d'évaluation et une dérive entre la valeur estimée et la valeur vraie. L'écart estimé est compatible avec l'usage de cette donnée comme correcteur de la valeur d'usure fonction de l'effort.

L'usage conventionnel du véhicule dégage des périodes de roulage pendant lesquelles le frein se refroidit suffisamment longtemps pour que sa température vraie et sa température calculée se rejoignent en asymptote de la température de fonctionnement de base. Le calcul est ainsi auto réinitialisé.

Dans l'invention, l'évaluation de la température actualisée permet de définir un gradient de température, celui-ci étant représentatif des sollicitations de freinage commandées par le conducteur, par les systèmes de freinage automatique ou par les conditions de roulage.

La connaissance des éléments, évoqués précédemment, à savoir les données instantanées, les données permanentes et les données variables, permet de définir avec précision la consommation d'usure à chaque coup de frein. L'invention propose donc de définir cette consommation d'usure pour chaque sollicitation de freinage puis d'effectuer une sommation des différentes consommations d'usure et enfin de comparer la valeur obtenue par sommation à une capacité de freinage de la garniture (capacité fournie par le fabricant de la garniture). Le résultat de cette comparaison est présenté au conducteur sous la forme d'un reste à rouler qui correspond en fait à une distance en kilomètres restant à parcourir avant maintenance du véhicule.

La consommation d'usure d'un garniture, ou plaquette, est mesurée sous la forme d'un débit fonction de la puissance transmise et de la température d'opération. Elle varie en continue avec ces deux éléments. Sa valeur est choisie dans une table définie par les caractéristiques du couple plaquette/disque et les données fournisseur. Cette table peut être affinée par des essais. La consommation par sollicitation de freinage est la sommation de ce débit sur la durée du freinage.

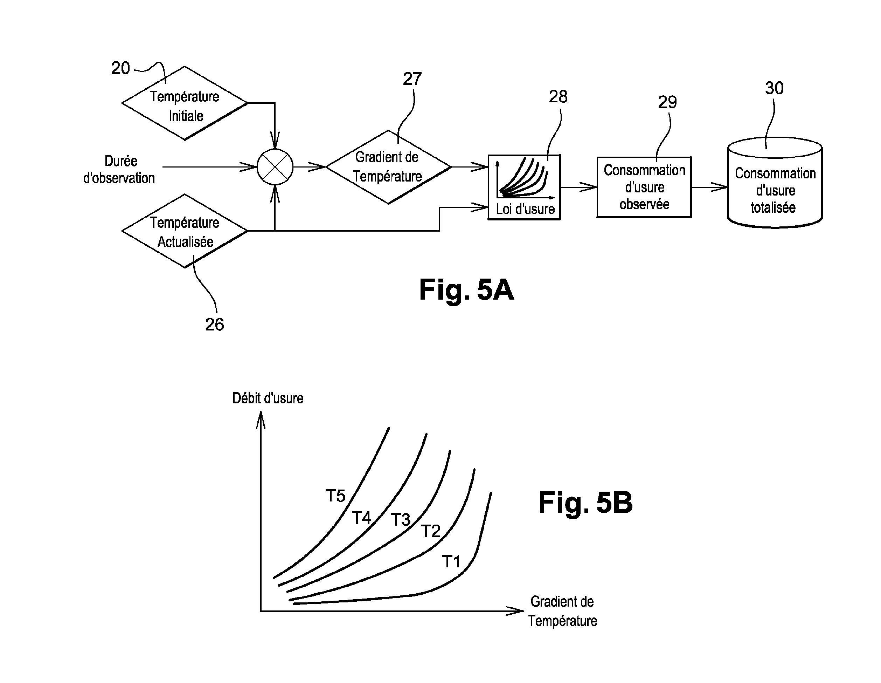

Le débit d'usure suit une loi représentée par un ensemble de courbes T1 à T5, sur la figure 5B. Ces courbes représentent le débit d'usure, en ordonnée, fonction du graduant de température, en abscisse. Cette loi du débit d'usure est définie par des essais successifs. Le débit d'usure est l'effet instantané de réaction du couple plaquette/disque sous l'effet de la sollicitation de freinage représentée par le gradient de température et suivant ses conditions d'état représentées par la température.

Sur la figure 5A, on a représenté un diagramme fonctionnel relatif à la détermination de la consommation d'usure totale. Comme montré sur ce diagramme, le gradient de température 27 est déterminé à partir de la température initiale 20 et de la température actualisée 26, en prenant en compte la durée d'observation, c'est-à-dire la durée de la sollicitation de freinage. A partir du gradient de température 27 et de la température actualisée 26, on détermine la loi d'usure 28 montrée sur la figure 5B. Cette loi d'usure 28 permet de déduire la consommation d'usure observée 29, c'est-à-dire la consommation d'usure pour une sollicitation de freinage. En effectuant la somme de toutes les consommations d'usure observées 29, on obtient la consommation d'usure totalisée 30. Cette consommation d'usure totalisée correspond à l'état d'usure de la garniture.

Dans l'invention, l'état d'usure de la garniture, c'est-à-dire la consommation d'usure totalisée, est présentée au conducteur sous la forme d'un kilométrage disponible avant maintenance. Ce kilométrage disponible avant maintenance correspond à une autonomie kilométrique. La détermination de cette autonomie est obtenue par une loi combinant le solde d'usure de la garniture, c'est-à-dire la quantité de matériau non usée, avec une moyenne de consommation de garniture et le kilométrage déjà réalisé par le véhicule avec la garniture considérée. Cette détermination de l'autonomie est proche de celle utilisée pour l'autonomie de carburant.

Le résultat du calcul d'autonomie est actualisé, en fonction de la conduite, pour un même solde d'usure. Le procédé de l'invention permet ainsi d'envoyer, au conducteur, une information d'autonomie mise à jour régulièrement jusqu'à la maintenance.

Le procédé de l'invention peut être combiné avec l'émission d'un message d'alerte signalant, au conducteur, une usure limite, cette usure limite correspondant au niveau d'usure maximum de la garniture. Selon l'invention, une usure limite est atteinte lorsque la distance restante est proche de zéro.

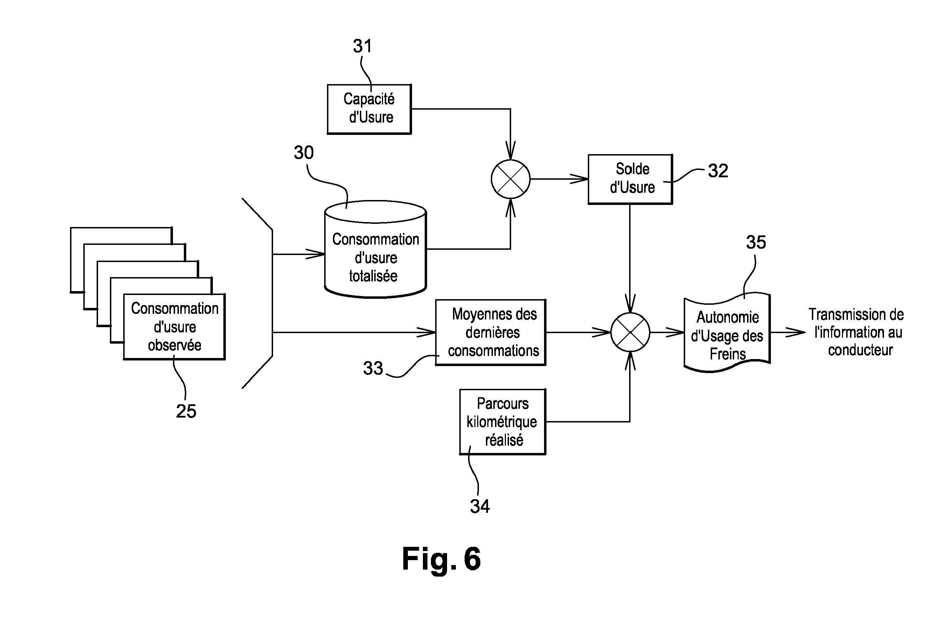

Sur la figure 6, on a représenté un diagramme fonctionnel relatif à l'obtention de l'information d'autonomie 35 d'usage des freins. Comme le montre cette figure, les différentes consommations d'usure observées 29 sont additionnées pour obtenir une consommation d'usure totalisée 30. Le résultat de cette sommation 30 est comparé à la capacité d'usure 31 de la garniture, fournie par le fabricant, pour donner un solde d'usure 32. Parallèlement, les dernières consommations d'usure observées 29 sont traitées afin de déterminer une moyenne 33 des dernières consommations. On détermine, à partir de cette moyenne 33 des dernières consommations, du solde d'usure 32 et du parcours kilométrique 34 déjà réalisé par le véhicule équipé de cette garniture, une autonomie 35 d'usage des freins. Cette autonomie 35 d'usage des freins est donnée sous la forme d'un kilométrage restant à parcourir avant maintenance. C'est cette autonomie d'usage des freins qui est transmise au conducteur. Elle peut aussi être transmise aux acteurs de maintenance.

Il est à noter que toutes les mesures nécessaires au calcul de l'autonomie d'usage des freins, qui ont été citées précédemment, sont déjà effectuées sur la plupart des véhicules actuels. L'invention ne nécessite donc pas d'appareil de mesure supplémentaire. Par contre, ces différentes mesures sont utilisées, dans l'art antérieur, pour réaliser des fonctions différentes de celles de l'invention. Dans l'invention, elles sont utilisées pour l'évaluation de la température actualisée et l'évaluation de l'autonomie d'usage des freins.

Ces évaluations peuvent être mises en oeuvre, dans le véhicule, soit dans un module indépendant, relié au réseau du véhicule, soit dans un boîtier déjà existant, comme le boîtier ABS ou le boîtier BSI relié aux données utilisées et capable de diffuser les informations.

Les différentes mesures utilisées dans l'invention sont obtenues au moyen de dispositifs de mesure du type capteurs. Les mesures de vitesse sont fournies par des capteurs de vitesse des roues et de vitesse du véhicule. La température ambiante et la température initiale sont fournies par des capteurs de température ou thermomètres. Les sollicitations de freinage sont détectées, notamment, par un capteur d'appui de la pédale de frein et un capteur d'appui de la pédale d'accélérateur. Généralement, sur les véhicules actuels, le capteur d'appui de pédale est un capteur tout ou rien qui signale une phase de freinage ou aucune phase de freinage, et qui sert habituellement à déclencher l'allumage des feux de stop. Dans l'invention, le capteur de pédale de frein permet de connaître le début et la fin d'une sollicitation de freinage par le conducteur. L'effort de freinage et son évolution pendant toute la durée du freinage sont fournis par un capteur de pression du circuit hydraulique et du freinage. Ce capteur de frein est présent dans les circuits de freinage avec régulation ESP. Il est à rajouter dans les circuits ABS. Le système de Répartition Electronique de Freinage (REF) peut fournir également des données relatives au freinage. Ce système REF est un système piloté de freinage dont la fonction est la répartition du freinage entre les essieux avant et arrière, en remplacement des compensateurs ou limitateurs de freinage, et utilisant les composants ABS déjà installés sur le véhicule.

Dans le procédé de l'invention, un apprentissage peut être mis en oeuvre pour estimer l'effet de charge du véhicule ainsi que l'effet de pente par comparaison des données en cours avec les données moyennes apprises. Cet apprentissage apporte des précisions dans les calculs. Toutefois, le procédé de l'invention peut être mis en oeuvre sans apprentissage, grâce aux mesures de sollicitation par les capteurs évoqués précédemment et, en particulier, le capteur de pression de freins et le capteur de vitesse instantanée (roue ou véhicule), et grâce aux lois prédéfinies chargées en mémoire. Dans ce cas, la consommation de garniture instantanée et cumulée est déterminée par calcul.

Le procédé de l'invention est principalement destiné à l'estimation de l'usure des freins de l'essieu avant, le plus soumis à ce phénomène d'usure et le plus sensible du point de vue sécurité. C'est d'ailleurs sur le train avant que sont habituellement implantés les témoins d'usure de l'art antérieur. Toutefois, l'invention est applicable à l'estimation de l'usure des freins arrière par une simple adjonction de lois de calcul sans autre complément de données. Dans ce cas, il est préférable d'utiliser le mode de réalisation avec apprentissage pour définir la sollicitation régulée du frein arrière.

Dans le mode de réalisation avec apprentissage, l'apprentissage permet d'estimer l'effet de charge et l'effet de pente sur le freinage du véhicule. Comme expliqué précédemment, la charge du véhicule et la pente de la route sur laquelle circule le véhicule ont un effet sur le freinage et donc sur l'usure des garnitures de frein. L'apprentissage permet de surveiller l'effet de la charge et de la pente par rapport à l'historique du véhicule. Il surveille, par exemple, si, dans une situation donnée, le véhicule est plus ou moins chargé que d'habitude. De même, il surveille si la pente peut avoir un effet sur la consommation de garniture, par rapport aux situations habituelles. Pour cela, le procédé d'apprentissage mémorise les données relatives à la charge et à la pente, pour chaque situation, et établit des moyennes qui évoluent au fur et à mesure des déplacements du véhicule. Ces moyennes sont appelées « moyennes apprises ».

L'apprentissage permet également de surveiller, via le signal de vitesse du véhicule ou des roues, les décélérations naturelles du véhicule fonction de la vitesse, pour un véhicule sans accélérateur et sans freinage. Cette surveillance permet de définir une décélération moyenne apprise. On peut ainsi définir la surcharge, due à la charge et/ou la pente, entre la valeur de décélération moyenne apprise et une valeur de décélération observée. La décélération observée est résultante, pour une même sollicitation de freinage, des conditions de charge du véhicule et des conditions de pente du parcours.

Dans le mode de réalisation avec apprentissage, certaines données sont déterminées par apprentissage, comme expliqué précédemment, et d'autres données sont déterminées par calcul. Par exemple, la décélération absolue et la sollicitation appliquée sont déterminées par calcul, respectivement, via le signal fourni par le capteur de vitesse véhicule et via le signal fourni par le capteur de pression de frein. Il est à noter que les conditions d'adhérence n'ont pas d'effet sur la loi de décélération si ce n'est de limiter la puissance de freinage à la limite d'adhérence des pneumatiques au sol.

Le calcul s'appuie sur les lois, des coefficients et des tableaux de valeurs prédéfinies, fonction de la conception du système de frein. Le calcul est destiné à s'adapter aux variations des conditions et domaines d'utilisation du véhicule, conduite du conducteur, variation des charges, diversité des trajets.

Le calcul permet, en particulier, de définir la loi de montée en température du système de frein, en fonction de la durée et de la variation de la sollicitation. Entre chaque application de freinage, il estime le refroidissement potentiel et la température de début de freinage de la sollicitation suivante. Pour chaque application de freinage, il calcule la perte de matériau, fonction de la sollicitation et de la température, la cumule en mémoire et la compare à la valeur de référence.

Quel que soit le mode de réalisation, avec ou sans apprentissage, l'évaluation de la température des freins, telle que décrite précédemment, permet, en outre, d'alerter le conducteur d'un risque de fading. Le fading, ou évanouissement, est un phénomène de perte de capacité de frottement des garnitures de freins lorsque le système de freinage atteint des températures extrêmes, dépassant les températures limites de fonctionnement. Pour des raisons de sécurité, il peut être intéressant de transmettre cette information au conducteur, par exemple, sous la forme d'un message d'alerte du type "Ralentissez le véhicule". En effet, en cas de fading, le système de freinage récupère ses capacités de ralentissement en refroidissant.

Le calcul de la température, réalisé pour déterminer l'état d'usure des garnitures du système de freinage, permet également de surveiller que la température limite de fonctionnement ne soit pas atteinte. Cette information de sécurité peut être transmise au conducteur qui doit l'interpréter comme une nécessité de ralentir et de moins solliciter les freins jusqu'au retour à une température de fonctionnement normale.

Quel que soit son mode de réalisation, le procédé qui vient d'être décrit peut être mis en oeuvre dans un système d'indication de la capacité d'utilisation restante des garnitures de frein. Ce système comporte les différents moyens de mesure et de détermination énoncés précédemment, comme par exemple les capteurs de vitesse et les capteurs d'appui et les capteurs de pression de frein. Il comporte également un moyen de calcul qui peut être l'ordinateur de bord, le boîtier ABS ou le boîtier BSI ou tout autre dispositif dédié au freinage et apte à effectuer des calculs. Il comporte, de plus, une mémoire dans laquelle sont chargées, d'une part, les lois utilisées pour le calcul d'usure et, d'autre part, les données mémorisées notamment pour l'apprentissage et pour la détermination des données moyennes. Ce système d'indication comporte également des moyens de transmission de l'information d'usure de garnitures et/ou de fading au conducteur, par signal visuel et/ou sonore.

On comprend de ce qui précède que l'invention a pour avantage de fournir une information active du niveau d'usure des garnitures, cette information étant personnalisée en fonction de l'usage réel du véhicule. Elle peut, de plus, être mise en oeuvre pour un coût relativement peu élevé car elle ne nécessite que des fonctions de traitement exploitant des données déjà existantes, sur les véhicules. Elle permet ainsi de supprimer certains éléments complexes montés généralement sur les véhicules, comme les témoins d'usure électrique. Elle a en outre l'avantage de permettre une surveillance de l'usure de chaque essieu.

## Revendications

1. Procédé de détermination d'une capacité d'utilisation restante de garnitures de frein d'un véhicule automobile comportant les étapes suivantes :
- détermination d'un état d'usure (30) d'une garniture de frein,
- détermination d'un solde d'usure (32) par comparaison de l'état d'usure avec une capacité de freinage (31) prédéfinie d'une garniture,
- détermination d'une distance (34) parcourue par le véhicule, avec cette garniture de frein, et
- évaluation, en fonction du solde d'usure et de la distance déjà parcourue, d'une distance restant à parcourir (35).

2. Procédé selon la revendication 1, **caractérisé en ce que** la détermination de l'état d'usure comporte :
- une détermination de données permanentes relatives au système de freinage du véhicule et au véhicule lui-méme ;
- une détermination de données variables relatives au déplacement du véhicule ;
- une détermination de données instantanées liées au freinage du véhicule ;
- une évaluation, à partir de ces données instantanées, variables et permanentes, d'une consommation (29) instantanée d'usure des garnitures à chaque sollicitation de freinage ; et
- un cumul des consommations instantanées d'usure des garnitures.

3. Procédé selon la revendication 2, **caractérisé en ce que** la détermination des données instantanées comporte une évaluation d'une température instantanée (26) du frein.

4. Procédé selon la revendication 3, **caractérisé en ce que** l'évaluation de la température instantanée comporte :
- une détermination de la vitesse du véhicule,
- une détermination d'une énergie de freinage, et
- une détermination d'une température de début de freinage (20).

5. Procédé selon l'une quelconque des revendications 2 à 4, **caractérisé en ce que** la détermination des données variables comporte la détermination de la charge du véhicule et la détermination d'une pente dans le parcours du véhicule.

6. Procédé selon l'une quelconque des revendications 2 à 5, **caractérisé en ce que** la détermination des données permanentes comporte une définition de caractéristiques de conception du frein, une définition de caractéristiques d'un couple garniture/frein et une définition de caractéristiques propres au véhicule lui-même.

7. Procédé selon l'une quelconque des revendications 2 à 6, **caractérisé en ce que** les données variables sont évaluées par apprentissage, en comparant des données mesurées avec des données apprises.

8. Procédé de détermination d'un risque de fading, **caractérisé en ce qu'**il comporte :
- une évaluation de la température instantanée du frein selon l'une quelconque des revendications 3 à 7, et
- une comparaison de ladite température instantanée du frein avec une température limite de fonctionnement.

9. Système d'indication d'une capacité d'utilisation restante d'une garniture de frein d'un véhicule automobile, **caractérisé en ce qu'**il comporte :
- des moyens pour déterminer un état d'usure de la garniture de frein,
- des moyens de calcul pour comparer cet état d'usure avec une capacité de freinage prédéfinie et pour déterminer une distance restant à rouler, et
- des moyens pour transmettre, au conducteur, une information de distance restant à parcourir.

10. Système selon la revendication 9, **caractérisé en ce que** les moyens pour déterminer l'état d'usure comportent au moins un capteur de vitesse, au moins un capteur d'appui de pédale de frein et au moins un capteur de pression de frein.

11. Système d'indication d'un risque de fading, **caractérisé en ce qu'**il met en oeuvre le procédé selon la revendication 8.

12. Véhicule automobile comportant des moyens de freinage, **caractérisé en ce qu'**il comporte un système d'indication d'une capacité d'utilisation restante d'une garniture de frein selon l'une quelconque des revendications 9 et 10.

13. Véhicule automobile comportant des moyens de freinage, **caractérisé en ce qu'**il comporte un système d'indication d'un risque de fading selon la revendication 11.
